# EUROPEAN PATENT APPLICATION

(11) **EP 4 793 603 A1**
(43) Date of publication of application: **19.08.2026**
(21) Application number: 26158769.5
(22) Date of filing: 16.02.2026
(51) Int. Cl.: G01F 1/66, G01F 15/00

(54) **DETECTION OF GAS METER DISCONNECTION**

(30) Priority: 18.02.2025 IT 202500003105
(71) Applicant: Italgas Reti S.p.A., 10153 Torino (TO) (IT)
(72) Inventor: CERASOLI, TALISA, Torino (IT); GENDUSO, CALOGERO, Torino (IT); VIGLIAROLO, MONICA, VINOVO (TO) (IT); BILELLO, LUCA, MILANO (IT)
(74) Representative: Bird & Bird Società tra Avvocati S.r.l.

(57) **Abstract**

A gas meter (**100**) configured to be installed at a site. The gas meter comprises: - an inlet duct (**102**(**in**)) couplable to a gas distribution network for receiving gas; - a measuring chamber (**110**) in fluid communication with said inlet duct (**102**(**in**)) and with an outlet duct (**102**(**out**)), said outlet duct (**102**(**out**)) being coupled to a user network for distributing gas at said site; - a gas metering system (**115**, **120**, **130**) configured to generate measurements indicating gas delivery from the distribution network to said user network through said metering chamber (**110**); - an accelerometer (**150**) configured to measure an acceleration to which said gas meter (**100**) is subjected by generating corresponding acceleration values, each indicative of an acceleration value to which said gas meter (**100**) is subjected in a corresponding time; - a first memory register (**160**) configured to store a basic acceleration value corresponding to an acceleration value generated by the accelerometer (**150**) at a basic time corresponding to an installation of the gas meter (**100**) in an installation position at the site; - a pressure sensor (**170**) configured to measure a pressure inside said measuring chamber (**110**); - a control unit (**115**) configured to perform the following operations, when said gas meter (**100**) is installed at the site with the inlet duct (**102**(**in**)) coupled to the gas distribution network: - collecting a set of acceleration values corresponding to a set of times; - comparing the acceleration values collected with the basic acceleration value; - generating said acceleration alarm (**230**; **240**) based on said comparison, only if both the following conditions C1 and C2 have occurred:
*C1.* a difference between each collected acceleration value and the basic acceleration value is greater than an acceleration threshold; and
C2. the collected acceleration values do not deviate from each other by more than a further acceleration threshold, in which said acceleration threshold is greater than said further acceleration threshold; in which said acceleration alarm being indicative of at least one between a displacement and a rotation of the gas meter (**100**) with respect to said installation position of the gas meter (**100**); - generating a disconnection alarm (**260**; **270**) indicative of a disconnection of the gas meter (**100**) from the gas distribution network if both of the following conditions *A1, A2* are met: *- A1.* the acceleration alarm has been generated, and *- A2.* a relative pressure between the measured internal pressure and an atmospheric pressure is less than a pressure threshold.

## Description

### Background of the present invention

### Field of the present invention

The present invention relates to the field of gas meters. In greater detail, the present invention relates to a system for detecting possible disconnections of a gas meter from a gas distribution network.

### Background of the correlated art

It is known that a gas meter is a device installed at a site (a house, apartment, commercial building, industrial building, etc.) that benefits from the supply of combustible gas by a gas distributor, having the function of producing a measurement of the gas effectively delivered at that location.

There are various types of gas meters, according to the technology used to measure the gas delivery. However, the most significant distinction is between a dynamic measuring principle and a static measuring principle.

To prevent economic losses by the suppliers (gas vendors), it would be important to be capable of detecting unauthorized disconnections of gas meters from the gas distribution network. Indeed, by disconnecting a gas meter of a distribution network without authorization and bypassing it, it would be possible to use the distributed gas fraudulently without paying for it.

Known solutions provide applying an accelerometric device to the gas meter capable of measuring the accelerations to which the gas meter is subjected, and detecting an unauthorized disconnection attempt of the meter from the distribution network on the basis of the acceleration measured by the accelerometer.

### Summary of the present invention

The Applicant has observed that the known solutions are not efficient, because they are affected by drawbacks that limit the reliability of the correct detection of an unauthorized disconnection attempt.

Indeed, relying solely on the acceleration measured by the accelerometer does not make it possible to determine whether an attempt of unauthorized disconnection of the meter is actually taking place.

Indeed, variations of the acceleration to which the gas meter is subjected may be caused by factors different from the actual disconnection of the meter. For example, the site in which the gas meter is installed could be located near a railway line, and the gas meter could oscillate during the passage of a railway train. Furthermore, the gas meter could be subjected to accelerations due to vibrations caused by the presence of nearby construction sites or seismic events. Given that all these cases may cause variations of the acceleration to which the gas meter is subjected, the occurrence of false positives would compromise a correct and reliable detection of a fraudulent attempt to disconnect the gas meter.

In view of the above, the Applicant has devised a solution to remedy this and further inconveniences.

One or more aspects of the present invention are set forth in the independent claims, with advantageous features of the same invention being set forth in the dependent claims, the wording of which is incorporated herein verbatim by reference (with any advantageous feature being set forth with reference to a specific aspect of the present invention which applies *mutatis mutandis* to any other aspect of the same).

One aspect of the present invention relates to a gas meter.

A gas meter is configured to be installed at a site.

The gas meter comprises an inlet duct couplable to a gas distribution network for receiving the gas.

The gas meter comprises a measuring chamber in fluid communication with said inlet conduit and with an outlet conduit.

Said outlet duct is couplable to a user network for the distribution of the gas at said site.

The gas meter comprises a gas measurement system configured to generate measurements indicating gas deliveries from the distribution network to said user network, through said measuring chamber.

The gas meter comprises an accelerometer configured to measure an acceleration to which said gas meter is subjected by generating corresponding acceleration values, each indicative of an acceleration value to which said gas meter is subjected in a corresponding time.

The gas meter comprises a pressure sensor configured to measure a pressure inside said measuring chamber.

The counter gas comprises control unit configured to perform the following operations, when said gas meter is installed at the site with the inlet duct coupled to the gas distribution network:
- generating an acceleration alarm based on said acceleration values, said acceleration alarm being indicative of at least either a displacement or a rotation of the gas meter relative to an installation position of the gas meter, said installation position corresponding to the position assumed by the meter when it is installed at the site;
- generating a disconnection alarm indicative of a disconnection of the gas meter from the gas distribution network if both of the following conditions *A1, A2* are met:
   - *A1.* the acceleration alarm has been generated, and
   - *A2.* a relative pressure between the measured internal pressure and an atmospheric pressure is less than a pressure threshold.

According to an embodiment of the present invention, the gas meter comprises a first memory register configured to store a basic acceleration value corresponding to an acceleration value generated by the accelerometer at a basic time corresponding to an installation of the gas meter in said installation position.

According to an embodiment of the present invention, the control unit is configured to collect a set of acceleration values corresponding to a set of times.

According to an embodiment of the present invention, the control unit is configured to compare the collected acceleration values with the basic acceleration value.

According to an embodiment of the present invention, the control unit is configured to generate said acceleration alarm on the basis of said comparison.

According to an embodiment of the present invention, the control unit is configured to generate said acceleration alarm if the following condition occurs: *C1.* a difference between each collected acceleration value and the basic acceleration value is greater than an acceleration threshold.

According to an embodiment of the present invention, the control unit is configured to generate said acceleration alarm if, in addition to the occurrence of said condition *C1,* the following condition *C2* is also satisfied:
*C2.* the collected acceleration values do not deviate from each other by more than a further acceleration threshold.

According to an embodiment of the present invention, said acceleration threshold is greater than said further acceleration threshold.

According to an embodiment of the present invention, the control unit is configured to collect said set of acceleration values if the following further condition is met: an acceleration value measured by said accelerometer is greater than a yet further acceleration threshold, said yet further acceleration threshold being smaller than said acceleration threshold.

According to an embodiment of the present invention, said basic time corresponds to a time after the expiry of a settling period from the end of the installation of the gas meter at the site.

According to an embodiment of the present invention, said accelerometer is configured to generate the acceleration values periodically, so as to define a sequence of acceleration values ordered in time.

According to an embodiment of the present invention, said set of collected acceleration values comprises consecutive acceleration values in said ordered sequence.

According to an embodiment of the present invention, the gas meter further comprises at least one communication unit.

According to an embodiment of the present invention, said control unit is configured to transmit remotely, by means of said at least one communication unit, said generated disconnection alarm.

According to an embodiment of the present invention, said accelerometer is an accelerometer configured to measure an acceleration along a set of orthogonal axes.

According to an embodiment of the present invention, each of said acceleration values comprises a corresponding component value for each orthogonal axis of the set.

According to an embodiment of the present invention, the gas meter further comprises a pressure sensor configured to measure the atmospheric pressure.

According to an embodiment of the present invention, said relative pressure corresponds to a difference between said measured internal pressure and said measured atmospheric pressure.

### Brief description of the drawings

These and other features and advantages of the present invention will be more apparent from the reading of the following detailed description of illustrative and non-limiting embodiments of the invention. For better intelligibility, the following description should be read with reference to the accompanying drawings, in which:
**Figure 1** is a functional simplified block diagram of a gas meter according to an embodiment of the present invention;
**Figure 2** shows, in terms of functional blocks, the operations performed by a control unit of the gas meter in **Figure 1** to detect an unauthorized disconnection of the gas meter from a gas distribution network, according to an embodiment of the present invention.

### Detailed description of non-limiting example embodiments of the present invention

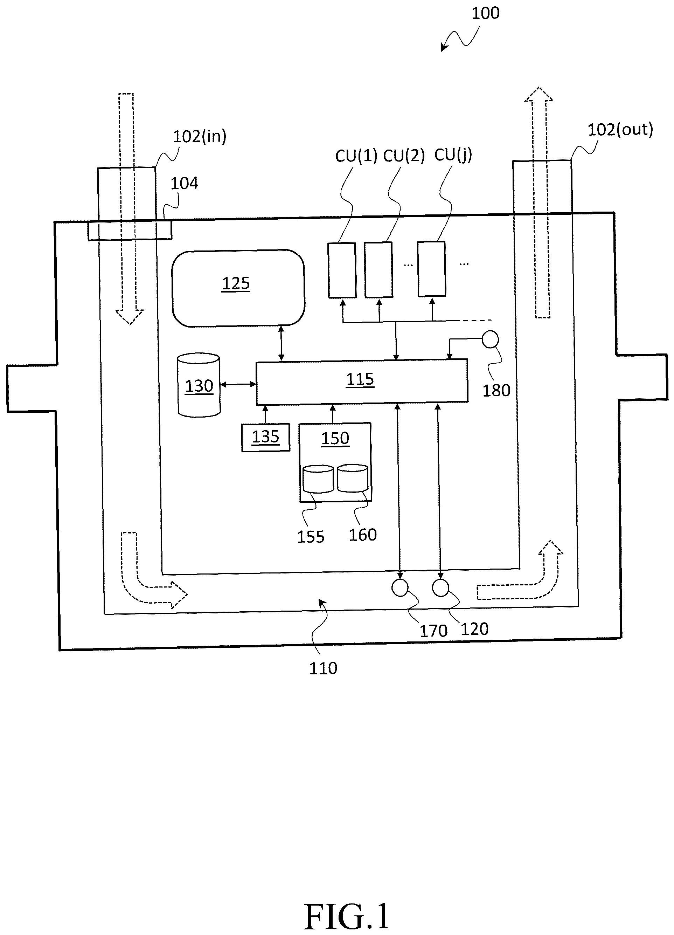

With reference to the drawings, **Figure 1** shows, in terms of simplified functional blocks, an example of a gas meter **100** for measuring gas delivered by a gas distributor to a site (such as a house, an apartment, a villa, a commercial business, an industrial plant, a warehouse) in which the gas meter **100** is installed, according to an embodiment of the present invention.

According to an embodiment of the present invention, the gas meter **100** comprises an inlet pipe **102(in)** to receive the gas from a gas distribution network (not shown).

According to an embodiment, the gas meter **100(i)** comprises a measuring chamber (or pipe) **110** in fluid communication with the inlet pipe **102(in)** and with an outlet pipe **102(out),** consequently defining a passage for gas from the inlet pipe **102(in)** to the outlet pipe **102(out).** The outlet pipe **102(out)** is connected to a user gas distribution network of the site (not shown) in which the gas meter **100** for the delivery of gas received at one or more gas use points within the site, is installed.

According to an embodiment of the present invention, the gas meter **100** comprises a control unit **115,** e.g., comprising one or more electronic processors, configured to manage the operations performed by the gas meter **100.**

According to an embodiment of the present invention, a sensor **120** for measuring the flow of gas flowing from the inlet pipe **102(in)** to the outlet pipe **102(out)** is coupled to the measuring chamber **110** (e.g., placed inside the measuring chamber **110).** The sensor **120** is configured to generate detection data *R* indicative of measurements of one or more physical quantities related/influenced/determined by the gas flow which crosses the measuring chamber **110.**

According to an embodiment of the present invention, the sensor **120** is a sensor based on static technology configured to measure family II gases (natural gas), with natural gas/hydrogen mixtures, and/or with family III gases (liquid propane gas). The sensor **120** and the control unit **115** are connected to exchange data and messages, such as commands (from the control unit **115** to the sensor **120**) for controlling the sensor **120** by the control unit **115,** and detection data *R* (from sensor **120** to the control unit **115**) generated by the sensor **120.** Without details known to those skilled in the art, the control unit **115** is configured to process the detection data *R* received from the sensor **120** to calculate corresponding measurement data *M* indicative of an actual amount of gas distributed to the site where the gas meter **100** is installed through the gas meter **100.**

However, it is emphasized that the concepts of the present invention are directly applicable to meters equipped with sensors made with different technologies, such as diaphragm, rotary piston, turbine, and infrared sensors.

According to an embodiment of the present invention, a valve **104,** e.g., a solenoid valve, is advantageously provided at the inlet pipe **102(in)** and operable by the control unit **115** to selectively enable/disable the entry of gas into the measuring chamber **110** - and, consequently, to selectively enable/disable the delivery of gas received at the points of gas use within the site where the gas meter **100** is installed.

According to an embodiment of the present invention, the gas meter **100** further comprises a user interface **125** controlled by the control unit **115** and comprising, e.g., a display for displaying information (such as measurement data *M* calculated by the control unit **115**), buttons, and/or interfaces for wired connections (e.g., such as RS232, USB, and optical ports) to allow a user or operator to interact with the gas meter **100.**

According to an embodiment of the present invention, the gas meter **100** comprises a memory unit **130** configured to store data, such as measurement data *M*. For example, the memory unit **130** can be coupled to the control unit **115** or can be directly part of the latter.

According to an embodiment of the present invention, the gas meter **100** comprises one or more communication units **CU(j)** (j = 1, 2, ..) controlled by the control unit **115** to transmit measurement data *M* to the gas distributor using a corresponding wireless transmission technology. According to an exemplary and non-limiting embodiment, the communication units **CU(j)** comprise a communication unit configured to transmit measurement data *M* using the Narrowband Internet of Things (NBIoT) technology, a communication unit configured to transmit measurement data *M* using the Bluetooth Low Energy (BLE) technology and a communication unit configured to transmit measurement data *M* using the Long Range (LoRa) technology. However, the concepts of the present invention are applicable to cases with a different number of communication units **CU(j)** (e.g., with a single communication unit **CU(j))** and to different wireless transmission technologies.

According to an embodiment of the present invention, the gas meter **100** comprises a power supply unit **135,** e.g., comprising one or more batteries, to supply electrical energy to the electrical/electronic/electromechanical components of the gas meter **100.**

According to an embodiment of the present invention, the power supply unit **135** may comprise at least one communication battery to power the communication units, and a metrological battery to power the elements of the gas meter **100** dedicated to generating and managing the measurement data *M*. The concepts of the present invention are nonetheless applicable to cases with a different number of batteries (e.g., with a number of batteries greater than two, comprising a battery dedicated to activation of the user interface **125** and/or one for activation of the valve **104,** or also with a single battery to power all components of the meter).

According to an embodiment of the present invention, the gas meter **100** comprises an accelerometer **150** integral to the gas meter **100** itself. The accelerometer **150** is configured to measure the acceleration to which the gas meter **100** is subjected (corresponding to the acceleration to which the accelerometer itself is subjected), calculating a corresponding acceleration value *A*.

According to an embodiment of the present invention, the accelerometer **150** is a sensor whose operating principle is based on inertia. Without excessive details known to those skilled in the art, the accelerometer **150** comprises a mass suspended with respect to a fixed structure of the accelerometer. When the gas meter **100** is subjected to an acceleration, such acceleration is also applied to the accelerometer **150.** The suspended mass contained in the accelerometer **150** tends to resist the motion caused by the acceleration, due to its inertia. The relative displacement of the suspended mass with respect to the fixed structure of the accelerometer depends on (e.g., is proportional to) the acceleration. The accelerometer **150** is configured to measure the displacement by generating a corresponding electrical signal *E*, the value of which is indicative of the measured displacement. The value of the electrical signal *E* is then processed to obtain a corresponding acceleration value *A*. The way in which the electrical signal *E* is generated depends on the specific type of accelerometer **150,** which may be, for example, of the piezoelectric, capacitive, semiconductor type.

According to an embodiment of the present invention, the accelerometer **150** is configured to measure acceleration along a plurality of orthogonal axes. In this case, the calculated acceleration value *A* is subdivided into a corresponding plurality of acceleration components, each indicative of the acceleration along a respective axis. For example, according to a non-limiting embodiment of the present invention, the accelerometer **150** is configured to measure acceleration along three orthogonal axes *X, Y, Z*, and the calculated acceleration value *A* comprises a corresponding triplet of components *Ax Ay, Az,* each indicative of the acceleration value along a respective axis.

When the gas meter **100** is in a static condition (e.g., after being installed at the site), and is no longer subjected to movements, the acceleration to which the gas meter **100** is subjected, and therefore the accelerometer **150,** is substantially only the gravitational acceleration *g* (equal to about 9.81 m/s²). Accordingly, in such condition, the acceleration value *A* calculated by the accelerometer **150** will correspond precisely to *g*. If the accelerometer **150** is configured to measure acceleration along multiple orthogonal axes (such as the three orthogonal axes *X, Y, Z*), the acceleration value *A* calculated by the accelerometer **150** provides an indication of how the gravitational acceleration *g* is decomposed along such orthogonal axes, thereby providing an indication of the actual orientation of the gas meter **100.**

When the gas meter **100** is instead subject to further external forces, due, for example, to a displacement and/or rotation of the gas meter **100** caused, for example, by an uninstallation of the gas meter **100** in progress on site, the acceleration to which the gas meter **100,** and therefore the accelerometer **150,** is subjected is the superposition of the gravitational acceleration g with the accelerations caused by such external forces. Consequently, under such conditions, the acceleration value *A* calculated by the accelerometer **150** will generally be different from *g*.

According to an embodiment of the present invention, the accelerometer **150** is configured to measure the acceleration periodically, with a measurement frequency *F,* for example comprised in the range of 10 - 100 Hz. In this manner, at each time interval *t(i)* of duration corresponding to the inverse of the measurement frequency *F*, the accelerometer **150** generates a corresponding new acceleration value *A(i).* For example, with reference to the exemplary case in which the accelerometer **150** is configured to measure acceleration along three orthogonal axes *X, Y, Z*, the accelerometer **150** generates a corresponding triplet of acceleration components *A(i)x, A(i)y, A(i)z* for each time interval *t(i).*

According to an embodiment of the present invention, the accelerometer **150** comprises a measurement memory register **155** configured for storing the acceleration values *A(i)* generated. For example, according to an embodiment of the present invention, the measurement memory register **155** is a FIFO ("First-In First-Out")-type memory register configured to store the last (i.e., the most recent) *N* acceleration values *A(i)* generated. For example, *N* may be equal to 32 or 64.

According to an embodiment of the present invention, the accelerometer **150** is coupled to the control unit **115,** so as to allow the control unit **115** to read the acceleration values *A(i)* stored in the measurement memory register **155** and send commands to the accelerometer **150.**

Alternative embodiments (not shown in the figure) are further contemplated, in which the memory register **155** is not directly included in the accelerometer **150,** but is separate therefrom. According to a further alternative embodiment (not shown in the figure), the measurement memory register **155** is directly part of the memory unit **130.**

According to an embodiment of the present invention, the accelerometer **150** comprises (or is coupled to) an installation memory register **160** configured to store a basic acceleration value *A(0).* According to an embodiment of the present invention, such basic acceleration value *A(0)* is stored under the control of an authorized operator following the installation of the gas meter **100** at the site, and corresponds to the acceleration value *A* calculated by the accelerometer **150** after a predetermined settling time period (e.g., 20 minutes) from the completion of the installation. If during the settling time period the authorized operator notes that the gas meter **100** has not been installed correctly, and there is the presence of some problems (e.g., gas leaks due to an incorrect installation), the storage of the basic acceleration value *A(0)* in the installation memory register **160** is postponed because the authorized operator must repeat the installation operations.

The basic acceleration value *A(0)* saved in the installation memory register **160** is an acceleration value corresponding to a static condition of the gas meter **100,** in which the acceleration to which the gas meter **100,** and hence the accelerometer **150,** is subjected is substantially only the gravitational acceleration *g*, and, consequently, the acceleration value calculated by the accelerometer **150** corresponds to *g*. If the accelerometer **150** is configured to measure acceleration along multiple orthogonal axes (such as the three orthogonal axes *X, Y, Z*), the basic acceleration value *A(0)* provides an indication of how the gravitational acceleration *g* is decomposed along such orthogonal axes, thereby providing an indication of the actual orientation of the gas meter **100** installed.

According to an embodiment of the present invention, once stored in the installation memory register **160,** the basic acceleration value *A(0)* may not be modified or deleted without authorization. For example, the basic acceleration value *A(0)* may be modified or deleted only by means of the direct intervention of an authorized operator.

As will be described in greater detail hereinafter in the present description, according to an embodiment of the present invention, the basic acceleration value *A(0)* stored in the installation memory register **160** is advantageously used as a reference to determine whether the gas meter **100** is subject to fraudulent (unauthorized) disconnection attempts from the gas distribution network. Specifically, as long as the acceleration value *A* currently calculated by the accelerometer **150** does not deviate from the stored basic acceleration value *A(0),* it means that the gas meter **100** remains in the same position and with the same orientation that it had after installation. If a sufficiently large divergence is detected between the acceleration value *A* currently calculated by the accelerometer **150** and the saved basic acceleration value *A(0),* it means that the gas meter **100** has been moved and/or rotated, and therefore it may have been disconnected from the gas distribution network.

According to an embodiment of the present invention, the gas meter **100** further comprises a pressure sensor **170** configured to measure the pressure *PG* of the gas in the measuring chamber **110.** According to an embodiment of the present invention, the pressure sensor **170** is located inside the measuring chamber **110.**

According to an embodiment of the present invention, the gas meter **100** comprises a further pressure sensor **180** configured to measure the atmospheric pressure *PA.* According to an embodiment of the present invention, the pressure sensor **180** is located outside the measuring chamber **110,** e.g., mounted on the same electronic board (not illustrated) on which the control unit **115** is mounted, and is thus at the same pressure of the environment in which the gas meter **100** is located.

According to an embodiment of the present invention, the pressure sensors **170, 180** are coupled to the control unit **115** so as to provide to the latter the measured pressure values.

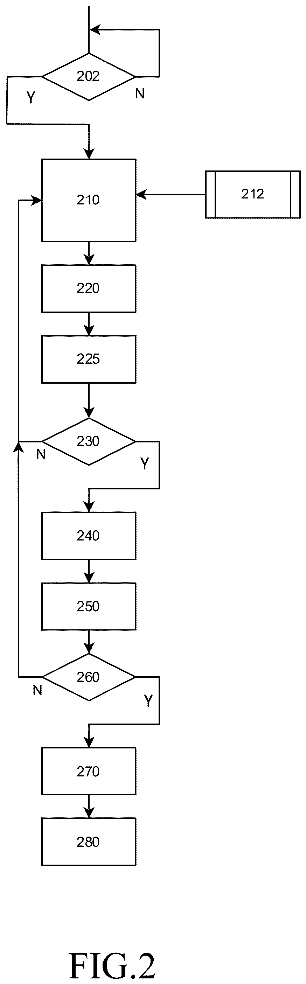

**Figure 2** illustrates, in terms of functional blocks, the operations performed by the control unit **115** for performing a tampering control procedure to detect possible unauthorized disconnections of the gas meter **100** from the gas distribution network, according to an embodiment of the present invention.

According to an embodiment of the present invention, the tampering control procedure provides for an initial verification of the fulfillment of preconditions *PC* (block **202**). Until the preconditions *PC* are satisfied, the tampering control procedure does not advance (output branch **N** of block **202,** return to block **202**).

According to an embodiment of the present invention, the preconditions *PC* comprise one or more (preferably, all) of the following preconditions:
- the accelerometer **150** is active, and it is measuring the acceleration to which the gas meter **100** is currently subjected, generating corresponding acceleration values *A(i)*;
- the pressure sensor **170** is active, and it is measuring the pressure *PG* in the measuring chamber **110;**
- the pressure sensor **180** is active, and it is measuring the atmospheric pressure *PA;*
- the gas meter **100** has been correctly installed and the basic acceleration value *A(0)* has been stored in the installation memory register **160;**
- an acceleration alarm *AA*, indicative of a stable divergence between the acceleration value *A(i)* generated by the accelerometer **150** and the basic acceleration value *A(0),* is not already active;
- a disconnection alarm *AM,* indicative of an unauthorized disconnection of the gas meter **100** from the gas distribution network, is not already active.

According to an embodiment of the present invention, if the preconditions *PC* are satisfied (output branch **Y** of block **202**), the control unit **115** enters a waiting condition (block **210**), and remains in the waiting condition until an interruption event *EI* by the accelerometer **105** occurs. During the waiting condition, the gas meter **100** usually performs the operations for generating and managing measurement data *M* on the basis of the data collected by the sensor **120** for measuring of the gas flow, the accelerometer **150** measures the acceleration to which the gas meter **100** is currently subjected, and the pressure sensors **170, 180** measure the respective pressures.

According to an embodiment of the present invention, the interruption event *EI,* which may cause the exiting from the waiting condition, comprises measuring by the accelerometer **150** an acceleration, the value *A(i)* of which deviates from the basic acceleration value *A(0)* by at least one value corresponding to a threshold *TH1* (block **212**). So, to avoid false positives, the threshold *TH1* is advantageously set based on how many vibrations are naturally present at the installation site of the gas meter **100** (e.g., considering whether there is a source of vibrations near the installation site, such as proximity to a railway). For example, with reference to an accelerometer with a full-scale of +/- 2g, a minimum threshold value *TH1* could be between 20 and 40 mg, for example equal to 31 mg.

If the accelerometer **150** is configured to measure acceleration along multiple orthogonal axes, such as the three orthogonal axes *X, Y,* Z, whether or not the threshold *TH1* is exceeded is evaluated taking into account (e.g., suitably combining) the acceleration components *A(i)x, A(i)y, A(i)z* along such axes. Advantageously, the threshold value *TH1* is set so that exceeding it may imply an inclination (along at least one of the orthogonal axes) of the orientation of the gas meter **100** with respect to the orientation corresponding to the basic acceleration value *A(0),* e.g., an inclination of 5%.

According to an embodiment of the present invention, upon occurrence of an interruption event *EI* - signaled by the accelerometer **150** - the control unit **115** exits the waiting condition, and accesses the measurement memory register **155** to retrieve a sequence of a number *N* of acceleration values *A(i)* generated by the accelerometer **150** (block **220**).

According to an embodiment of the present invention, the sequence of *N* acceleration values *A(i)* retrieved by the control unit **115** comprises the acceleration value *A(i)* that caused the interruption event *EI* and the *N-1* acceleration values *A(i)* generated by the accelerometer **150** immediately after the generation of the acceleration value *A(i)* that caused the interruption event *EI.*

According to another embodiment of the present invention, the sequence of *N* acceleration values *A(i)* retrieved by the control unit **115** comprises a sequence of *N* acceleration values *A(i)* generated by the accelerometer **150** subsequent to the acceleration value *A(i)* that caused the interruption event *EI,* e.g., the sequence of the *N* acceleration values *A(i)* generated by the accelerometer **150** immediately after the generation of the acceleration value *A(i)* that caused the interruption event *EI.*

The number *N* of acceleration values *A(i)* of the sequence collected by the control unit **115** may, for example, be equal to 10 - 50 (also as a function of the size of the measurement memory register **155**). With reference to an example in which *N* is equal to 32, and the measurement frequency *F* of the accelerometer **150** is equal to 25 Hz, the *N* acceleration values *A(i)* of the sequence collected by the control unit **115** correspond to a time interval of about 1.3 s.

According to an embodiment of the present invention, the control unit **115** subtracts from each of the sequence of *N* acceleration values *A(i)* the basic acceleration value *A(0)* so as to obtain a corresponding sequence of *N* corresponding relative acceleration values *AR(i)* (relative to the basic acceleration value *A(0)* (block **225**).

If the accelerometer **150** is configured to measure the acceleration along multiple orthogonal axes (such as the three orthogonal axes *X, Y, Z*), and therefore each of the *N* acceleration values *A(i)* of the sequence comprises a respective set of components, each corresponding to the acceleration along one of such axes (e.g., a triplet *A(i)x, A(i)y, A(i)z),* the difference between *A(i)* and *A(0)* is performed between each component of *A(i)* and *A(0).*

According to an embodiment of the present invention, the control unit **115** checks (block **230**) whether in the sequence of *N* relative acceleration values *AR(i)* there is at least one subsequence of *N'* (≤ *N*) consecutive acceleration values, which satisfies both the following two conditions *C1* and *C2:*
*C1.* each relative acceleration value *AR(i)* of the subsequence of *N'* is greater than a threshold *TH2;*
*C2.* the relative acceleration values *AR(i)* of the subsequence of *N'* do not differ from each other by more than a threshold *TH3.*

If the accelerometer **150** is configured to measure acceleration along multiple orthogonal axes, such as the three orthogonal axes *X, Y, Z*, the exceeding or not of thresholds *TH2* and *TH3* is evaluated taking into account (e.g., suitably combining) the components of the relative acceleration *AR(i)* along such axes.

Exemplary values of *N*' may belong to the range 6-20, e.g., they may be equal to 8.

Exemplary values of the threshold *TH2* may fall within the range 80 - 250 mg, e.g., 100 mg.

Exemplary values of the threshold *TH3* may fall within the range 20 - 80 mg, e.g., 50 mg.

When verified, the condition *C1* implies a condition of the gas meter **100** in which the acceleration to which the gas meter **100** is subjected deviates from the basic acceleration value *A(0)* by a sufficiently large value - i.e., greater than *TH2 -* for a time period *PT* at least equal to the period necessary for the acquisition of *N'* acceleration values *A(i)* by the accelerometer **150.** With reference to an exemplary case in which the measurement frequency *F* of the accelerometer **150** is 25 Hz, and *N'* is equal to 8, such time period *PT* is equal to about 300 ms.

When verified, the condition *C2* implies a condition of the gas meter **100** in which the acceleration to which the gas meter **100** is subjected is sufficiently stable - i.e., contained within a range of values [-(*TH3)*/*2, +(TH3)*/*2]* - for a time period *PT* at least equal to the period necessary for the acquisition of *N'* acceleration values *A(i)* by the accelerometer **150.**

According to an embodiment of the present invention, if the control unit **115** establishes that conditions *C1* and *C2* are not both verified (output branch **N** of block **230**), the control unit **115** returns to the waiting condition (return to block **210**). If the condition *C1* is not met, it means that the variation of acceleration that caused the interruption event *EI* has not evolved into a variation sufficiently large to imply an actual displacement of the gas meter **100.** If the condition *C2* is not verified, it means that the acceleration to which the gas meter **100** is subjected is not sufficiently stable, and could be due to oscillations of another kind, not attributable to an actual displacement of the gas meter **100.**

According to an embodiment of the present invention, if the control unit **115** determines that conditions *C1* and *C2* are both satisfied (output branch **Y** of block **230**), the control unit **115** determines that the gas meter **100** is subjected to an acceleration that has resulted in an actual displacement (and/or rotation) with respect to the position it had on installation, and activates the acceleration alarm *AA* (block **240**).

According to an embodiment of the present invention, for verifying whether the detected displacement (and/or rotation) of the gas meter **100** is due to an unauthorized disconnection of the gas meter **100** from the distribution network, the control unit **115** calculates (block **250**) the difference *DP* between the pressure *PG* inside the measuring chamber **110** (obtained by means of the pressure sensor **170**) and the atmospheric pressure *PA* (obtained by means of the pressure sensor **180**).

According to an embodiment of the present invention, if the difference *DP* is not less than a corresponding threshold *THP* (output branch **N** of block **260**), the control unit **115** establishes that although the gas meter **100** has indeed been subjected to a displacement and/or a rotation, the gas meter **100** is nevertheless still connected to the distribution network, because no significant pressure drops have occurred in the measuring chamber **110.** For example, this case may occur if the displacement and/or rotation of the gas meter **100** are due to structural settlements, seismic events, or other external causes which, however, have not led to the actual disconnection of the gas meter **100** from the distribution network. If the control unit **115** determines that the gas meter **100** is still connected to the distribution network, the control unit **115** returns to the waiting condition (return to block **210**).

According to an embodiment of the present invention, if the difference *DP* is smaller than a corresponding threshold *THP* (output branch **Y** of block **260**), the control unit **115** establishes that the displacement and/or rotation to which the gas meter **100** has been subjected has led to an actual (unauthorized) disconnection of the gas meter **100** from the distribution network, because the gas pressure *PG* inside the measuring chamber **110** (no longer coupled to the gas distribution network) has substantially decreased, tending toward atmospheric pressure *PA.* In this case, the control unit **115** activates the disconnection alarm *AM* (block **270**).

Exemplary values of the *THP* threshold may belong to the range 3-10 mbar, for example, they may be equal to 6 mbar.

According to an embodiment of the present invention, following activation of the disconnection alarm *AM,* the control unit **115** may transmit (block **280**) the disconnection alarm *AM* to the gas distributor using one or more of the communication units **CU(j).** In this manner, the gas distributor is promptly notified of the unauthorized disconnection of the gas meter **100** from the distribution network.

With respect to known solutions based exclusively on the monitoring of acceleration variations, the solution according to the embodiments of the invention described herein is more reliable and efficient, as it allows timely determination of whether an unauthorized attempt to disconnect the meter is actually occurring. The solution according to the embodiments of the invention described herein indeed allow avoiding the generation of false alarms in case the variations in acceleration to which the gas meter is subjected are caused by factors different from the actual disconnection of the meter, such as oscillations caused by construction sites, seismic events, the presence of railways.

Of course, to meet local and specific requirements, a person skilled in the art can apply various logical and/or physical modifications and alterations to the above invention. More specifically, although the present invention has been described with some degree of particularity with reference to its preferred embodiment, it should be understood that various omissions, substitutions, and modifications in form and detail, and other embodiments are possible. In particular, various embodiments of the invention may also be put into practice without the specific details given in the preceding description to provide a deeper understanding of it; conversely, well-known functions may have been omitted or simplified so as not to burden the description with unnecessary details.

## Claims

1. A gas meter (**100**) configured to be installed at a site, the gas meter comprising:
- an inlet duct (**102(in)**) couplable to a gas distribution network for receiving gas;
- a measuring chamber (**110**) in fluid communication with said inlet duct (**102(in)**) and with an outlet duct (**102(out)**), said outlet duct (**102(out)**) being coupled to a user network for distributing gas at said site;
- a gas metering system (**115, 120, 130**) configured to generate measurements indicating gas delivery from the distribution network to said user network through said metering chamber (**110**);
- an accelerometer (**150**) configured to measure an acceleration to which said gas meter (**100**) is subjected by generating corresponding acceleration values, each indicative of an acceleration value to which said gas meter (**100**) is subjected in a corresponding time;
- a first memory register (**160**) configured to store a basic acceleration value corresponding to an acceleration value generated by the accelerometer (**150**) at a basic time corresponding to an installation of the gas meter (**100**) in an installation position of the gas meter (**100**), said installation position corresponding to the position assumed by the meter (**100**) when it is installed at the site;
- a pressure sensor (**170**) configured to measure a pressure inside said measuring chamber (**110**);
- a control unit (**115**) configured to perform the following operations, when said gas meter (**100**) is installed at the site with the inlet duct (**102(in)**) coupled to the gas distribution network:
- collecting a set of acceleration values corresponding to a set of times;
- comparing the acceleration values collected with the basic acceleration value;
- generating said acceleration alarm (**230; 240**) based on said comparison, only if both the following conditions C1 and C2 have occurred:
*C1.* a difference between each collected acceleration value and the basic acceleration value is greater than an acceleration threshold; and
*C2.* the collected acceleration values do not deviate from each other by more than a further acceleration threshold, wherein said acceleration threshold is greater than said further acceleration threshold; wherein said acceleration alarm being indicative of at least one between a displacement and a rotation of the gas meter (**100**) with respect to said installation position of the gas meter (**100**),
- generating a disconnection alarm (**260; 270**) indicative of a disconnection of the gas meter (**100**) from the gas distribution network if both the following conditions *A1, A2* are met:
- *A1.* the acceleration alarm has been generated, and
- *A2.* a relative pressure between the measured internal pressure and an atmospheric pressure is less than a pressure threshold.

2. The gas meter (**100**) according to claim 1, wherein the control unit (**115**) is configured to collect said set of acceleration values if the following further condition occurs:
- an acceleration value measured by said accelerometer (**150**) is greater than a yet further acceleration threshold, said yet further acceleration threshold being smaller than said acceleration threshold.

3. The gas meter (**100**) according to claim 1, wherein said basic time corresponds to a time elapsed after the expiration of a settling period from the end of the installation of the gas meter (**100**) at the site.

4. The gas meter (**100**) according to claim 1, wherein:
- said accelerometer (**150**) is configured to generate the acceleration values periodically, so as to define a sequence ordered in time of acceleration values;
- said collected set of acceleration values comprises consecutive acceleration values in said ordered sequence.

5. The gas meter (**100**) according to claim 1, wherein the gas meter further comprises at least one communication unit (**CU(j)**), said control unit (**115**) being configured to transmit said generated disconnection alarm remotely by means of said at least one communication unit (**CU(j)**).

6. The gas meter (**100**) according to claim 1, wherein:
said accelerometer (**150**) is an accelerometer configured to measure an acceleration along a set of orthogonal axes, each of said acceleration values comprising a corresponding component value for each orthogonal axis of the set;
- said condition C2 checks that the collected acceleration values do not deviate from each other by more than said further acceleration threshold.

7. The gas meter (**100**) according to any one of the preceding claims, wherein the gas meter (**100**) further comprises a pressure sensor configured to measure atmospheric pressure, said relative pressure corresponding to a difference between said measured internal pressure and said measured atmospheric pressure, said pressure threshold being configured to detect a condition in which the internal pressure is close to atmospheric pressure.
